(19) **Europäisches Patentamt European Patent Office Office européen des brevets**

(11) **EP 4 246 609 A1**

(12) **EUROPEAN PATENT APPLICATION**
published in accordance with Art. 153(4) EPC

(43) Date of publication:
**20.09.2023 Bulletin 2023/38**

(21) Application number: **22868732.3**

(22) Date of filing: **31.05.2022**

(51) International Patent Classification (IPC):
*H01M 4/13* (2010.01)     *H01M 4/133* (2010.01)
*H01M 4/134* (2010.01)     *H01M 4/139* (2010.01)
*H01M 4/1393* (2010.01)     *H01M 4/1395* (2010.01)
*H01M 10/42* (2006.01)     *H01M 10/0525* (2010.01)
*H01M 10/054* (2010.01)

(52) Cooperative Patent Classification (CPC):
**H01M 4/13; H01M 4/133; H01M 4/134;
H01M 4/139; H01M 4/1393; H01M 4/1395;
H01M 10/0525; H01M 10/054; H01M 10/42;
Y02E 60/10**

(86) International application number:
**PCT/CN2022/096212**

(87) International publication number:
**WO 2023/040355 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2021   CN 202111104915**

(71) Applicant: **Contemporary Amperex Technology
Co., Limited
Ningde, Fujian 352100 (CN)**

(72) Inventors:
- **XIE, Lan
  Ningde, Fujian 352100 (CN)**
- **SHI, Songjun
  Ningde, Fujian 352100 (CN)**
- **SHA, Ying
  Ningde, Fujian 352100 (CN)**
- **LIN, Zhen
  Ningde, Fujian 352100 (CN)**
- **LI, Wei
  Ningde, Fujian 352100 (CN)**

(74) Representative: **Gong, Jinping
CocreateIP
Eggenfeldenerstraße 56
81929 München (DE)**

(54) **NEGATIVE ELECTRODE PLATE AND PREPARATION METHOD THEREFOR, SECONDARY BATTERY, BATTERY MODULE, BATTERY PACK AND POWER-CONSUMING APPARATUS**

(57)    This application discloses a negative electrode plate, a preparation method thereof, a secondary battery, a battery module, a battery pack, and an electric apparatus. The negative electrode plate includes a negative electrode current collector and a negative electrode film layer, where the negative electrode film layer is provided on at least one surface of the negative electrode current collector and includes a negative electrode active material; where at least part of surface of the negative electrode active material is provided with an artificial solid electrolyte interface film, where the artificial solid electrolyte interface film includes a first inorganic lithium salt, and the first inorganic lithium salt is selected from one or two of $Li_2CO_3$ and $Li_2SO_3$. The negative electrode plate disclosed in this application can effectively reduce gas production of a secondary battery and improve storage performance of the secondary battery.

FIG. 1

Description

CROSS-REFERENCE TO RELATED APPLICATIONS

This application claims priority to Chinese Patent Application No. 202111104915.3, filed on September 18, 2021 and entitled "NEGATIVE ELECTRODE PLATE, PREPARATION METHOD THEREOF, SECONDARY BATTERY, BATTERY MODULE, BATTERY PACK, AND ELECTRIC APPARATUS", which is incorporated herein by reference in its entirety.

TECHNICAL FIELD

This application pertains to the field of battery technologies, and in particular to a negative electrode plate, a preparation method thereof, a secondary battery, a battery module, a battery pack, and an electric apparatus.

BACKGROUND

Secondary batteries are charged and discharged through repeated intercalation and deintercalation of active ions between a positive electrode and a negative electrode, with outstanding features such as high energy density, long cycle life, no pollution, and no memory effect. Therefore, as clean energy, secondary batteries have been gradually popularized from electronic products to large-scale apparatuses such as electric vehicles to adapt to sustainable development strategies of environment and energy. However, secondary batteries also have disadvantages. For example, after a secondary battery is stored for a long time, its capacity decreases, and gas production increases, which may even affect life safety of users.

SUMMARY

An objective of this application is to provide a negative electrode plate, a preparation method thereof, a secondary battery, a battery module, a battery pack, and an electric apparatus, to effectively reduce gas production of a secondary battery and improve storage performance of the secondary battery.

To achieve the foregoing objective, a first aspect of this application provides a negative electrode plate. The negative electrode plate includes a negative electrode current collector and a negative electrode film layer, where the negative electrode film layer is provided on at least one surface of the negative electrode current collector and includes a negative electrode active material; where at least part of surface of the negative electrode active material is provided with an artificial solid electrolyte interface film, where the artificial solid electrolyte interface film includes a first inorganic lithium salt, and the first inorganic lithium salt is selected from one or two of $Li_2CO_3$ and $Li_2SO_3$.

With good physical and chemical stability, an artificial SEI film is a solid electrolyte film with electronic insulativity and good ionic conductivity. In a case that a secondary battery is in long time storage under low voltage so as to overdischarge, the artificial SEI film with electronic insulativity can inhibit reduction decomposition of a conventional SEI film, thus reducing gas production of the secondary battery. The artificial SEI film can further inhibit the electrolytic salt, organic solvent, additive, and impurities (for example, a trace amount of $H_2O$ and dissolved $O_2$) in an electrolyte from obtaining electrons on the surface of the negative electrode active material to have reduction reaction, thereby further reducing gas production of the secondary battery. Therefore, the negative electrode plate in this application can effectively reduce gas production of a secondary battery and improve storage performance of the secondary battery.

In any embodiment of this application, calculated based on a total mass of the artificial solid electrolyte interface film, a mass percentage of the first inorganic lithium salt is 20% to 90%. Optionally, the mass percentage of the first inorganic lithium salt is 80% to 90%. The mass percentage of the first inorganic lithium salt being within an appropriate range enables the artificial SEI film to have low impedance while continuously protecting the negative electrode active material, so that the secondary battery has both low gas production and low impedance.

In any embodiment of this application, the artificial solid electrolyte interface film further includes $Li_2O$. $Li_2O$ can improve stability of the artificial SEI film, so that the artificial SEI film can continuously protect the negative electrode active material, reducing gas production of a secondary battery and improving storage performance of the secondary battery.

In any embodiment of this application, calculated based on a total mass of the artificial solid electrolyte interface film, a mass percentage of the $Li_2O$ is 10% to 80%. Optionally, the mass percentage of the $Li_2O$ is 10% to 20%. The mass percentage of the $Li_2O$ being within an appropriate range enables the artificial SEI film to have low impedance while continuously protecting the negative electrode active material, so that the secondary battery has both low gas production and low impedance.

In any embodiment of this application, the artificial solid electrolyte interface film includes a first inorganic lithium

salt and $Li_2O$.

In any embodiment of this application, the artificial solid electrolyte interface film has a thickness of 5 nm to 10 nm. With a thickness within an appropriate range, the artificial SEI film can have low impedance while continuously protecting the negative electrode active material, so that the secondary battery has both low gas production and low impedance.

In any embodiment of this application, mass concentration deviations of elements C, O, S, and Li at any point of the artificial solid electrolyte interface film are all below 2%.

In any embodiment of this application, the artificial solid electrolyte interface film is located on 80% to 100% of surface of particles of the negative electrode active material. Optionally, the artificial solid electrolyte interface film is located on 95% to 100% of the surface of the particles of the negative electrode active material. Located on nearly the entire surface of the particles of the negative electrode active material, the artificial SEI film can continuously protect the negative electrode active material, further reducing gas production of the secondary battery, and improving storage performance of the secondary battery.

In any embodiment of this application, calculated based on a total mass of the negative electrode active material in the negative electrode film layer, a mass percentage of the negative electrode active material provided with the artificial solid electrolyte interface film on surface is 80% to 100%. Optionally, the mass percentage of the negative electrode active material provided with the artificial solid electrolyte interface film on surface is 95% to 100%. In the negative electrode film layer, nearly the entire surface of the negative electrode active material is provided with an artificial SEI film, further reducing gas production of the secondary battery and improving storage performance of the secondary battery.

In any embodiment of this application, the negative electrode plate is applied to a secondary battery; and after formation ends, at least part of the surface of the negative electrode active material is provided with an artificial solid electrolyte interface film and a conventional solid electrolyte interface film located on surface of the artificial solid electrolyte interface film.

A second aspect of this application provides a preparation method of negative electrode plate, including the following steps: S10. providing a raw negative electrode plate, where the raw negative electrode plate includes a negative electrode current collector and a negative electrode film layer, where the negative electrode film layer is provided on at least one surface of the negative electrode current collector and includes a negative electrode active material; S20. providing a lithium metal layer on the negative electrode film layer to obtain a lithium-supplemented negative electrode plate; and S30. making lithium metal in the lithium-supplemented negative electrode plate react with a gas mixture containing $O_2$ and one or two of $CO_2$ and $SO_2$, so as to form an artificial solid electrolyte interface film on at least part of surface of the negative electrode active material, where the artificial solid electrolyte interface film includes a first inorganic lithium salt, and the first inorganic lithium salt is selected from one or two of $Li_2CO_3$ and $Li_2SO_3$.

In any embodiment of this application, in S20, a mass of the lithium metal is 0.1 mg/1540mm$^2$ to 2 mg/1540mm$^2$.

In any embodiment of this application, in S30, a ratio of a volume of $O_2$ to a total volume of $CO_2$ and $SO_2$ in the gas mixture is 1:12 to 4:1. Optionally, the ratio of the volume of $O_2$ to the total volume of $CO_2$ and $SO_2$ in the gas mixture is 1:8 to 2:1.

In any embodiment of this application, in S30, reaction is performed for 1 h to 72 h. Optionally, reaction is performed for 2 h to 48 h.

In any embodiment of this application, in S30, the method for making lithium metal in the lithium-supplemented negative electrode plate react with a gas mixture containing $O_2$ and one or two of $CO_2$ and $SO_2$ includes: placing the lithium-supplemented negative electrode plate in a nonaqueous organic solvent; and continuously applying a gas mixture containing $O_2$ and one or two of $CO_2$ and $SO_2$ into the nonaqueous organic solvent to make the lithium metal react with the gas mixture, so as to form an artificial solid electrolyte interface film on at least part of the surface of the negative electrode active material. Optionally, the nonaqueous organic solvent is selected from one or more of dimethyl carbonate, ethyl methyl carbonate, and diethyl carbonate.

In any embodiment of this application, in S30, the method for making lithium metal in the lithium-supplemented negative electrode plate react with a gas mixture containing $O_2$ and one or two of $CO_2$ and $SO_2$ includes: directly placing the lithium-supplemented negative electrode plate in a gas mixture containing $O_2$ and one or two of $CO_2$ and $SO_2$ to make the lithium metal react with the gas mixture, so as to form an artificial solid electrolyte interface film on at least part of the surface of the negative electrode active material.

A third aspect of this application provides a secondary battery, including the negative electrode plate according to the first aspect of this application or the negative electrode plate prepared using the method according to the second aspect of this application.

A fourth aspect of this application provides a battery module, including the secondary battery according to the third aspect of this application.

A fifth aspect of this application provides a battery pack, including one of the secondary battery according to the third aspect of this application and the battery module according to the fourth aspect of this application.

A sixth aspect of this application provides an electric apparatus, including at least one of the secondary battery according to the third aspect of this application, the battery module according to the fourth aspect of this application, and the battery pack according to the fifth aspect of this application.

The secondary battery in this application has low gas production, and therefore has significantly improved storage performance. The secondary battery in this application may also have low impedance and improved cycling performance and rate performance. The battery module, the battery pack, and the electric apparatus in this application include the secondary battery provided in this application, and therefore have at least the same advantages as the secondary battery.

## BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skills in the art may still derive other drawings from the accompanying drawings without creative efforts.

FIG. 1 is a schematic diagram of an embodiment of a secondary battery in this application.
FIG. 2 is a schematic exploded view of an embodiment of a secondary battery in this application.
FIG. 3 is a schematic diagram of an embodiment of a battery module in this application.
FIG. 4 is a schematic diagram of an embodiment of a battery pack in this application.
FIG. 5 is an exploded view of FIG. 4.
FIG. 6 is a schematic diagram of an embodiment of an electric apparatus using the secondary battery in this application as a power source.

## DESCRIPTION OF EMBODIMENTS

The following specifically discloses embodiments of a negative electrode plate, a preparation method thereof, a secondary battery, a battery module, a battery pack, and an electric apparatus in this application with appropriate reference to detailed descriptions of accompanying drawings. However, there may be cases where unnecessary detailed descriptions are omitted. For example, detailed description of a well-known matter or repeated description of an actually identical structure has been omitted. This is to prevent the following descriptions from becoming unnecessarily cumbersome, facilitating understanding of those skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combinations may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is an integer such as 2, 3, 4, 5, 6, 7, 8, 9, 10, 11, or 12.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method includes steps (a) and (b), which indicates that the method may include steps (a) and (b) performed in sequence, or may include steps (b) and (a) performed in sequence. For example, the foregoing method may further include step (c), which indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

**Negative electrode plate**

During initial charging of the secondary battery, electrolytic salt, organic solvent, additive, and impurities (for example, a trace amount of $H_2O$ and dissolved $O_2$) in an electrolyte may have reduction reaction on a solid-liquid phase interface between a negative electrode active material and the electrolyte, where products of the reduction reaction include a gas product, a liquid product, and a solid product. The gas product includes hydrocarbon gases such as $C_2H_4$ and inorganic gases such as $CO_2$ and $H_2$; the produced liquid product may be dissolved in the electrolyte; and the produced solid product may cover surface of the negative electrode active material so as to form a passivation film layer, that is, a solid electrolyte interface film (Solid Electrolyte Interface Film, referred to as SEI film for short). Such SEI film mainly includes various inorganic components (for example, $Li_2CO_3$, LiF, $Li_2O$, and LiOH), and various organic components (for example, alkyl lithium carbonate $ROCO_2Li$ and $(ROCO_2Li)_2$, and lithium alkoxy ROLi, specifically including $CH_3OCO_2Li$, $CH_3CH_2OCO_2Li$, $(CH_2OCO_2Li)_2$, $Li(CH_2CH_2OCO_2)Li$, $CH_3CH(OCO_2Li)CH_2OCO_2Li$, $CH_2(OCO_2Li)CH_2OCO_2Li$, $CH_3CH_2OLi$, and the like). Such SEI film is a solid electrolyte film with electronic insulativity and good ionic conductivity, and can prevent reduction reaction of a solvent on surface of a negative electrode active material, and especially prevent damages to the negative electrode active material caused by co-intercalation of solvent molecules.

However, in a case that a secondary battery is in long time storage under low voltage so as to overdischarge, potential at a negative electrode increases continuously, and the SEI film is likely to decompose. When a secondary battery is stored in a high-temperature environment, the SEI film is unstable and may decompose. Gases may be produced in decomposition of the SEI and therefore cause volume swelling of the secondary battery. In addition, after the SEI film on the surface of the negative electrode active material decomposes, the exposed surface of the negative electrode active material may still react with the electrolytic salt, the organic solvent, the additive, and the impurities (for example, a trace amount of $H_2O$ and dissolved $O_2$) in the electrolyte. This process is called SEI repair. In a SEI repair process, a large amount of active ions are consumed, resulting in capacity reduction of the secondary battery. In addition, lots of gas products may also be produced in the SEI repair process, further aggravating volume swelling of the secondary battery, which may even affect life safety of users.

To resolve the foregoing problems, the inventors have proposed, based on a large number of studies, a novel negative electrode plate that can effectively reduce gas production of a secondary battery and improve storage performance of the secondary battery. The negative electrode plate includes a negative electrode current collector and a negative electrode film layer, where the negative electrode film layer is provided on at least one surface of the negative electrode current collector and includes a negative electrode active material, where at least part of surface of the negative electrode active material is provided with an artificial solid electrolyte interface film (referred to as artificial SEI film for short), where the artificial solid electrolyte interface film includes a first inorganic lithium salt, and the first inorganic lithium salt is selected from one or two of $Li_2CO_3$ and $Li_2SO_3$.

After the negative electrode plate in this application is applied to a secondary battery, in an initial charging process (corresponding to a formation process), the electrolytic salt, organic solvent, additive, and impurities (for example, a trace amount of $H_2O$ and dissolved $O_2$) in an electrolyte may still have reduction reaction on a solid-liquid phase interface between an artificial solid electrolyte interface film and the electrolyte to form a conventional solid electrolyte interface film (referred to as a conventional SEI film for short). The conventional solid electrolyte interface film mainly includes various inorganic components (for example, $Li_2CO_3$, LiF, $Li_2O$, and LiOH), and various organic components (for example, alkyl lithium carbonate $ROCO_2Li$ and $(ROCO_2Li)_2$, and lithium alkoxy ROLi, specifically including $CH_3OCO_2Li$, $CH_3CH_2OCO_2Li$, $(CH_2OCO_2Li)_2$, $Li(CH_2CH_2OCO_2)Li$, $CH_3CH(OCO_2Li)CH_2OCO_2Li$, $CH_2(OCO_2Li)CH_2OCO_2Li$, $CH_3CH_2OLi$, and the like). Therefore, at least part of surface of the negative electrode active material is provided with both an artificial solid electrolyte interface film and a conventional solid electrolyte interface film located on surface of the artificial solid electrolyte interface film.

In the negative electrode plate in this application, the "artificial solid electrolyte interface film" on the surface of the negative electrode active material differs from the "conventional solid electrolyte interface film" formed on the surface of the negative electrode active material in the formation process of the secondary battery. In addition, the "artificial solid electrolyte interface film" in this application is formed before initial charging (corresponding to formation) of the secondary battery. The negative electrode plate in this application is applied to a secondary battery; and after formation ends, a conventional solid electrolyte interface film layer may be further formed on surface of an artificial solid electrolyte interface film, so that at least part of surface of the negative electrode active material is provided with both an artificial solid electrolyte interface film and a conventional solid electrolyte interface film located on surface of the artificial solid electrolyte interface film. Therefore, after the negative electrode plate in this application is applied to a secondary battery, at least part of the surface of the negative electrode active material is provided with double SEI film layers.

With good physical and chemical stability, the artificial SEI film in this application is a solid electrolyte film with electronic insulativity and good ionic conductivity. In a case that a secondary battery is in long time storage under low voltage so as to overdischarge, potential at a negative electrode increases continuously, and a conventional SEI film is easy to decompose. With electronic insulativity, an artificial SEI film can inhibit reduction decomposition of the conventional SEI film, thus reducing gas production of the secondary battery.

In a case that a secondary battery is in long time storage under a low voltage or in high temperature storage so as to overdischarge, a conventional SEI film may decompose and enters a repair process. With electronic insulativity, an artificial SEI film can inhibit the electrolytic salt, organic solvent, additive, and impurities (for example, a trace amount of $H_2O$ and dissolved $O_2$) in an electrolyte from capturing electrons from surface of a negative electrode active material to have reduction reaction, thereby further reducing gas production of the secondary battery.

In addition, presence of the artificial SEI film can further reduce consumption of active ions during repair of the conventional SEI film, thus preventing damages to the negative electrode active material caused by co-intercalation of solvent molecules, and therefore further improving cycling performance of a secondary battery.

In some embodiments, calculated based on a total mass of the artificial solid electrolyte interface film, a mass percentage of the first inorganic lithium salt is 20% to 90%. For example, the mass percentage of the first inorganic lithium salt is 20% to 90%, 25% to 90%, 30% to 90%, 35% to 90%, 40% to 90%, 45% to 90%, 50% to 90%, 55% to 90%, 60% to 90%, 65% to 90%, 70% to 90%, 75% to 90%, 80% to 90%, or 85% to 90%. The mass percentage of the first inorganic lithium salt being within an appropriate range enables the artificial SEI film to have low impedance while continuously protecting the negative electrode active material, so that the secondary battery has both low gas production and low impedance.

In some embodiments, the artificial solid electrolyte interface film further includes $Li_2O$. $Li_2O$ can improve stability of the artificial SEI film, so that the artificial SEI film can continuously protect the negative electrode active material, reducing gas production of a secondary battery and improving storage performance of the secondary battery.

In some embodiments, calculated based on a total mass of the artificial solid electrolyte interface film, a mass percentage of $Li_2O$ is 10% to 80%. For example, the mass percentage of the $Li_2O$ is 10% to 80%, 10% to 75%, 10% to 70%, 10% to 65%, 10% to 60%, 10% to 55%, 10% to 50%, 10% to 45%, 10% to 40%, 10% to 35%, 10% to 30%, 10% to 25%, 10% to 20%, or 10% to 15%. The mass percentage of the $Li_2O$ being within an appropriate range enables the artificial SEI film to have low impedance while continuously protecting the negative electrode active material, so that the secondary battery has both low gas production and low impedance.

In some embodiments, the artificial solid electrolyte interface film may further include a small amount of organic lithium salt, and calculated based on a total mass of the artificial solid electrolyte interface film, a mass percentage of the organic lithium salt is below 40%. For example, the mass percentage of the organic lithium salt is 0% to 40%, 0% to 35%, 0% to 30%, 0% to 25%, 0% to 20%, 0% to 15%, 0% to 10%, 0% to 5%, 0% to 3%, or 0% to 1%. The organic lithium salt may include alkyl lithium carbonate $ROCO_2Li$ and $(ROCO_2Li)_2$, lithium alkoxy $ROLi$, and the like. For example, the organic lithium salt may include $CH_3OCO_2Li$, $CH_3CH_2OCO_2Li$, $(CH_2OCO_2Li)_2$, $Li(CH_2CH_2OCO_2)Li$, $CH_3CH(OCO_2Li)CH_2OCO_2Li$, $CH_2(OCO_2Li)CH_2OCO_2Li$, $CH_3CH_2OLi$, and the like. With a lower mass percentage of organic lithium salt, the artificial SEI film has a higher stability, and can continuously protect the negative electrode active material, effectively reducing gas production of a secondary battery, and improving storage performance of the secondary battery.

In some embodiments, the artificial solid electrolyte interface film includes a first inorganic lithium salt and $Li_2O$.

In some embodiments, the first inorganic lithium salt is $Li_2SO_3$. In this case, the artificial SEI film can have low impedance while continuously protecting the negative electrode active material, so that the secondary battery has both low gas production and low impedance. In addition, the secondary battery has better cycling performance and rate performance.

In some embodiments, the artificial solid electrolyte interface film includes $Li_2SO_3$ and $Li_2O$. A mass percentage of the $Li_2SO_3$ may be 20% to 90%, 25% to 90%, 30% to 90%, 35% to 90%, 40% to 90%, 45% to 90%, 50% to 90%, 55% to 90%, 60% to 90%, 65% to 90%, 70% to 90%, 75% to 90%, 80% to 90%, or 85% to 90%. A mass percentage of the $Li_2O$ is 10% to 80%, 10% to 75%, 10% to 70%, 10% to 65%, 10% to 60%, 10% to 55%, 10% to 50%, 10% to 45%, 10% to 40%, 10% to 35%, 10% to 30%, 10% to 25%, 10% to 20%, or 10% to 15%.

In some embodiments, the artificial solid electrolyte interface film has a thickness of 5 nm to 10 nm. With a thickness within an appropriate range, the artificial SEI film can have low impedance while continuously protecting the negative electrode active material, so that the secondary battery has both low gas production and low impedance.

In some embodiments, the conventional solid electrolyte interface film has a thickness of 5 nm to 20 nm.

The thickness of the artificial solid electrolyte interface film and the thickness of the conventional solid electrolyte interface film may be measured using a method commonly known in the art. In an example, a cross section polishing instrument (for example, an IB-09010CP argon ion cross section polishing instrument manufactured by Japan Electronics Co., Ltd. (JEOL)) may be used to treat cross sections of particles of the negative electrode active material, where the cross sections run through a core of particles of the negative electrode active material; subsequently, an EDX (Energy Dispersive X-Ray Spectroscopy, energy dispersive X-ray spectroscopy) or EDS is used to perform element analysis and a TEM (Transmission Electron Microscope, transmission electron microscope) or SEM (Scanning Electron Microscope, scanning electron microscope) is used to perform scanning to obtain a distribution diagram of elements in the cross sections; and thickness of the artificial solid electrolyte interface film and thickness of the conventional solid electrolyte interface film are obtained based on element distribution of the cross sections. More accurately, thicknesses at a plurality of (more than 3, for example, 5, 8, 10, or 12) different locations on the cross section may be measured, and an average thereof is recorded as a test result.

In some embodiments, the artificial solid electrolyte interface film is located on 80% to 100% of surface of particles of the negative electrode active material. Optionally, the artificial solid electrolyte interface film is located on 95% to 100% of the surface of the particles of the negative electrode active material. Located on nearly the entire surface of the particles of the negative electrode active material, the artificial SEI film can continuously protect the negative electrode active material, further reducing gas production of the secondary battery, and improving storage performance of the secondary battery.

In some embodiments, calculated based on a total mass of the negative electrode active material in the negative electrode film layer, a mass percentage of the negative electrode active material provided with the artificial solid electrolyte interface film on surface is 80% to 100%. Optionally, the mass percentage of the negative electrode active material provided with the artificial solid electrolyte interface film on surface is 95% to 100%. In the negative electrode film layer, nearly the entire surface of the negative electrode active material is provided with an artificial SEI film, further reducing gas production of the secondary battery and improving storage performance of the secondary battery.

In some embodiments, mass concentration deviations of elements C, O, S, and Li at any point of the artificial solid electrolyte interface film are all below 2%.

In this application, mass concentrations of the elements C, O, S, and Li at any point of the artificial solid electrolyte interface film are respectively mass concentrations of the elements C, O, S, and Li in all elements within an extremely small volume of the point, and the mass concentrations can be measured using an XPS (X-ray photoelectron spectroscopy). Elements contained in the extremely small volume of the point can be obtained through peak fitting of XPS peak-fitting software, and relative percentages of all the elements can be calculated based on a peak area, and recorded as the mass concentrations of the elements. When element analysis is performed by the XPS, the mass concentrations of an element at different points of the artificial solid electrolyte interface film are recorded as $\eta_1, \eta_2, \eta_3 \ldots,$ and $\eta_n$ respectively, where n is a positive integer greater than or equal to 10, and an average mass concentration of the element at different points is recorded as $\overline{\eta}$.

The respective mass concentration deviations $\sigma$ of the elements C, O, S, and Li at any point of the artificial solid electrolyte interface film can all be obtained through calculation according to the following formula (1):

$$\sigma = \frac{\max\left\{\left|\eta_1 - \overline{\eta}\right|, \left|\eta_2 - \overline{\eta}\right|, \left|\eta_3 - \overline{\eta}\right|, \cdots, \left|\eta_n - \overline{\eta}\right|\right\}}{\overline{\eta}} \qquad \text{Formula (1)}$$

In the negative electrode plate in this application, the negative electrode film layer generally includes a negative electrode active material, an optional binder, an optional conductive agent, and other optional additives. The negative electrode film layer is usually formed by applying a negative electrode slurry onto the negative electrode current collector, followed by drying and cold-pressing. The negative electrode slurry is usually formed by dispersing the negative electrode active material, the optional conductive agent, the optional binder, the optional additive, and the like in a solvent and stirring them to uniformity. The solvent may be but is not limited to N-methylpyrrolidone (NMP) or deionized water. The types and percentages of the conductive agent and the binder are not specifically limited and can be selected according to actual needs. In an example, the conductive agent may include one or more of superconducting carbon, carbon black (for example, acetylene black or Ketjen black), carbon dots, carbon nanotube, graphene, and carbon nanofiber. In an example, the binder may include one or more of styrene-butadiene rubber (SBR), water-soluble unsaturated resin (SR-1B), waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS). Other optional additives may include a thickener (for example, sodium carboxymethyl cellulose CMC-Na), a PTC thermistor material, and the like.

In some embodiments, the type of the negative electrode active material is not specifically limited, and any commonly known negative electrode active material for secondary batteries in the art may be used. In an example, the negative electrode active material may include one or more of graphite, soft carbon, hard carbon, a mesocarbon microbead, carbon fiber, carbon nanotube, a silicon-based material, a tin-based material, and a lithium titanate material. The silicon-based material may include one or more of elemental silicon, a silicon-oxygen compound, a silicon-carbon compound, a silicon-nitrogen compound, and a silicon alloy. The tin-based material may include one or more of elemental tin, a tin oxide, and a tin alloy. This application is not limited to these materials, and other conventional commonly known materials that can be used as a negative electrode active material for secondary batteries may also be used. One type of these negative electrode active materials may be used alone, or two or more types may be used in combination.

In some embodiments, the negative electrode current collector may be a metal foil or a composite current collector. In an example, the metal foil may be a copper foil. The composite current collector may include a polymer material matrix and a metal material layer formed on at least one surface of the polymer material matrix. In an example, the metal material may be selected from one or more of copper, copper alloy, nickel, nickel alloy, titanium, titanium alloy, silver, and silver alloy. In an example, the polymer material matrix may be selected from polypropylene (PP), polyethylene terephthalate (PET), polybutylene terephthalate (PBT), polystyrene (PS), polyethylene (PE), or the like. The negative electrode current collector has two opposite surfaces in its thickness direction, and the negative electrode film layer is laminated on either or both of the two opposite surfaces of the negative electrode current collector.

## Preparation method

This application further provides a preparation method of negative electrode plate. The preparation method of negative electrode plate includes at least the following S 10, S20, and S30.

S10. Provide a raw negative electrode plate, where the raw negative electrode plate includes a negative electrode current collector and a negative electrode film layer, where the negative electrode film layer is provided on at least one surface of the negative electrode current collector and includes a negative electrode active material.

S20. Provide a lithium metal layer on the negative electrode film layer to obtain a lithium-supplemented negative electrode plate.

S30. Make lithium metal in the lithium-supplemented negative electrode plate react with a gas mixture containing $O_2$ and one or two of $CO_2$ and $SO_2$, so as to form an artificial solid electrolyte interface film on at least part of surface of the negative electrode active material, where the artificial solid electrolyte interface film includes a first inorganic lithium salt, and the first inorganic lithium salt is selected from one or two of $Li_2CO_3$ and $Li_2SO_3$.

In a preparation process of the raw negative electrode plate, moisture in the negative electrode film layer cannot be removed completely. Therefore, the negative electrode film layer may contain a trace amount of $H_2O$. In addition, the gas mixture also inevitably contains a trace amount of $H_2O$. With the trace amount of $H_2O$, the lithium metal can react with the gas mixture to produce a first inorganic lithium salt. A relatively low moisture content results in a relatively moderate reaction between the lithium metal and the gas mixture.

The preparation method of negative electrode plate in this application can enable $Li_2CO_3$ and $Li_2SO_3$ to be uniformly distributed in the artificial solid electrolyte interface film, and mass concentration deviations of elements C, O, S, and Li at any point of the artificial solid electrolyte interface film are all below 2%.

In some embodiments, in S20, a mass of the lithium metal is 0.1 mg/1540mm$^2$ to 2 mg/1540mm$^2$.

In some embodiments, in S20, a raw material and a form of the lithium metal layer are not limited, and the raw material of the lithium metal layer may be selected from one or more of lithium powder, a lithium ingot, a lithium sheet, and a lithium strip. The lithium metal layer may also be incompletely densely and uniformly distributed on surface of the raw negative electrode plate. For example, when the raw material of the lithium metal layer is lithium powder, gaps may exist among lithium powder particles, and the gaps may be controlled between 1 $\mu$m to 5000 $\mu$m. When the raw material of the lithium metal layer is a lithium ingot, a lithium strip, or a lithium sheet, a plurality of lithium sheets (or lithium strips) may be formed and spaced apart on the surface of the raw negative electrode plate, and space between every two adjacent lithium sheets (or lithium strips) may be controlled between 1 $\mu$m to 5000 $\mu$m.

In some embodiments, in S20, the lithium metal layer may be provided on surface of the negative electrode film layer by means of calendering.

In some embodiments, in S30, a purity of $O_2$ is greater than or equal to 99.995%, a purity of $CO_2$ is greater than or equal to 99%, and a purity of $SO_2$ is greater than or equal to 99%.

In some embodiments, in S30, a mass percentage of moisture in the gas mixture is less than or equal to 0.2%.

In some embodiments, in S30, a ratio of a volume of $O_2$ to a total volume of $CO_2$ and $SO_2$ in the gas mixture is 1:12 to 4:1. Optionally, the ratio of the volume of $O_2$ to the total volume of $CO_2$ and $SO_2$ in the gas mixture is 1:8 to 2:1.

In some embodiments, the gas mixture contains $O_2$ and $CO_2$, where a ratio of a volume of $O_2$ to a volume of $CO_2$ is 1:12 to 4:1. Optionally, the ratio of the volume of $O_2$ to the volume of $CO_2$ is 1:8 to 2:1.

In some embodiments, the gas mixture contains $O_2$ and $SO_2$, where a ratio of a volume of $O_2$ to a volume of $SO_2$ is 1:12 to 4:1. Optionally, the ratio of the volume of $O_2$ to the volume of $SO_2$ is 1:8 to 2:1.

In some embodiments, the gas mixture contains $O_2$, $CO_2$ and $SO_2$, where a ratio of a volume of $O_2$ to a total

volume of $CO_2$ and $SO_2$ is 1:12 to 4:1. Optionally, the ratio of the volume of $O_2$ to the total volume of $CO_2$ and $SO_2$ is 1:8 to 2:1.

In some embodiments, in S30, reaction is performed for 1 h to 72 h. Optionally, reaction is performed for 2 h to 48 h.

The ratio of the volume of $O_2$ to the total volume of $CO_2$ and $SO_2$ in the gas mixture, the reaction time and the like may be appropriately adjusted based on components and thickness of an artificial SEI film required.

In some embodiments, the method for making lithium metal in the lithium-supplemented negative electrode plate react with a gas mixture containing $O_2$ and one or two of $CO_2$ and $SO_2$ includes: placing the lithium-supplemented negative electrode plate in a nonaqueous organic solvent; and continuously applying a gas mixture containing $O_2$ and one or two of $CO_2$ and $SO_2$ into the nonaqueous organic solvent to make the lithium metal react with the gas mixture, so as to form an artificial solid electrolyte interface film on at least part of the surface of the negative electrode active material. Optionally, the organic solvent is selected from one or more of dimethyl carbonate, ethyl methyl carbonate, and diethyl carbonate.

In some other embodiments, the method for making lithium metal in the lithium-supplemented negative electrode plate react with a gas mixture containing $O_2$ and one or two of $CO_2$ and $SO_2$ includes: directly placing the lithium-supplemented negative electrode plate in a gas mixture containing $O_2$ and one or two of $CO_2$ and $SO_2$ to make the lithium metal react with the gas mixture, so as to form an artificial solid electrolyte interface film on at least part of the surface of the negative electrode active material.

**Secondary battery**

Embodiments of this application further provide a secondary battery. The secondary battery includes the negative electrode plate in this application or the negative electrode plate prepared using the method in this application.

A secondary battery, also referred to as a rechargeable battery or a storage battery, is a battery whose active material can be activated for continuous use through charging after the battery is discharged.

Generally, a secondary battery includes a positive electrode plate, a negative electrode plate, a separator, and an electrolyte. During charging and discharging of the battery, active ions (such as lithium ions) migrate between the positive electrode plate and the negative electrode plate. The separator is disposed between the positive electrode plate and the negative electrode plate to mainly prevent a short circuit between positive and negative electrodes and to allow the active ions to pass through. The electrolyte mainly conducts the active ions between the positive electrode plate and the negative electrode plate.

[Positive electrode plate]

A positive electrode plate generally includes a positive electrode current collector and a positive electrode film layer, where the positive electrode film layer is provided on at least one surface of the positive electrode current collector and includes a positive electrode active material. For example, the positive electrode current collector has two opposite surfaces in its thickness direction, and the positive electrode film layer is provided on either or both of the two opposite surfaces of the positive electrode current collector.

In the positive electrode plate in this application, the positive electrode film layer generally includes the positive electrode active material, an optional binder, and an optional conductive agent. The positive electrode film layer is usually formed by applying a positive electrode slurry onto the positive electrode current collector, followed by drying and cold-pressing. The positive electrode slurry is usually formed by dispersing the positive electrode active material, the optional conductive agent, the optional binder, and any other components in a solvent and stirring them to uniformity. The solvent may be but is not limited to N-methylpyrrolidone (NMP). In an example, the binder for the positive electrode film layer may include one or more of polyvinylidene fluoride (PVDF), polytetrafluoroethylene (PTFE), vinylidene-fluoride-tetrafluoroethylene-propylene terpolymer, vinylidene-fluoride-hexafluoropropylene-tetrafluoroethylene terpolymer, tetrafluoroethylene-hexafluoropropylene copolymer, and fluorine-containing acrylic resin. In an example, the conductive agent for the positive electrode film layer may include one or more of superconducting carbon, acetylene black, carbon black, Ketjen black, carbon dots, carbon nanotubes, graphene, and carbon nanofiber.

In the positive electrode plate in this application, the positive electrode current collector may be a metal foil or a composite current collector. As an example of the metal foil, an aluminum foil may be used as the positive electrode current collector. The composite current collector may include a polymer material matrix and a metal material layer formed on at least one surface of the polymer material matrix. In an example, the metal material may be selected from one or more of aluminum, aluminum alloy, nickel, nickel alloy, titanium, titanium alloy, silver, and silver alloy. In an example, the polymer material matrix may be selected from polypropylene (PP), polyethylene terephthalate (PET), polybutylene terephthalate (PBT), polystyrene (PS), polyethylene (PE), or the like.

In the positive electrode plate in this application, the positive electrode film layer includes a positive electrode active material, where the positive electrode active material may be a commonly known positive electrode active material for secondary batteries in the art.

It should be noted that the secondary battery in this application may be a lithium-ion battery or a sodium-ion battery.

When the secondary battery in this application is a lithium-ion battery, optionally, the positive electrode active material may include one or more of lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof. However, this application is not limited to these materials, and other conventional commonly known materials that can be used as the positive electrode active material for lithium-ion batteries may also be used. One of these positive electrode active materials may be used alone, or two or more of them may be used in combination.

For example, the positive electrode active material for lithium-ion batteries may be selected from one or more of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$ (LFP), and $LiMnPO_4$.

When the secondary battery in this application is a sodium-ion battery, optionally, the positive electrode active material may be selected from transition metal oxide $Na_xMO_2$ (M is a transition metal that may be selected from one or more of Mn, Fe, Ni, Co, V, Cu, and Cr, where $0<x\leq1$), a polyanionic material (for example, phosphate, fluorophosphate, pyrophosphate, and sulfate), a Prussian-blue material, and the like, but is not limited thereto in this application; and other materials that can be used as a positive electrode active material for sodium-ion batteries may alternatively be used. One of these positive electrode active materials may be used alone, or two or more of them may be used in combination.

Optionally, the positive electrode active material for sodium-ion batteries may be selected from one or more of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian-blue material, and a material with a general formula of $A_aM_b(PO_4)_cO_xY_{3-x}$. In the general formula $A_aM_b(PO_4)_cO_xY_{3-x}$, A is selected from one or more of $H^+$, $Li^+$, $Na^+$, $K^+$, and $NH_4^+$; M represents transition metal cations that may be selected from one or more of V, Ti, Mn, Fe, Co, Ni, Cu, and Zn; and Y represents halogen anions that may be selected from one or more of F, Cl, and Br, where $0<a\leq4$, $0<b\leq2$, $1\leq c\leq3$, and $0\leq x\leq2$.

In some embodiments, the modified compounds of the positive electrode active materials may be obtained by subjecting the positive electrode active materials to doping modification, surface coating modification, or both doping modification and surface coating modification.

[Electrolyte]

The electrolyte conducts the active ions between the positive electrode plate and the negative electrode plate. In this application, the electrolyte is a liquid electrolyte. The liquid electrolyte includes an electrolytic salt and a solvent.

In some embodiments, the electrolytic salt is not limited to a specific type, and may be selected according to actual needs.

When the secondary battery in this application is a lithium-ion battery, as an example, the electrolytic salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP).

When the secondary battery in this application is a sodium-ion battery, in an example, the electrolytic salt may be selected from one or more of $NaPF_6$, $NaClO_4$, $NaBCl_4$, $NaSO_3CF_3$, and $Na(CH_3)C_6H_4SO_3$.

In some embodiments, the solvent is not limited to a specific type, and may be selected according to actual needs. In an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), and ethylsulfonyl ethane (ESE).

In some embodiments, optionally, the solvent is a nonaqueous solvent.

In some embodiments, the liquid electrolyte further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

In some embodiments, the additive may include one or more of a cyclic carbonate compound containing unsaturated bonds, a halogen-substituted cyclic carbonate compound, a sulfate compound, a sulfite compound, a sultone compound, a disulfonic compound, a nitrile compound, an aromatic compound, an isocyanate compound, a phosphonitrile compound, a cyclic anhydride compound, a phosphite ester compound, a phosphate ester compound, a borate compound, and a carboxylic ester compound. Optionally, the second additive may include one or both of vinylene carbonate (VC) and fluoroethylene carbonate (FEC).

[Separator]

Secondary batteries using a liquid electrolyte and some secondary batteries using a solid electrolyte further include a separator. The separator is disposed between the positive electrode plate and the negative electrode plate to provide separation. The separator is not limited to any specific type in this application, and may be any commonly known porous separator with good chemical stability and mechanical stability. In some embodiments, a material of the separator may be selected from one or more of glass fiber, non-woven fabric, polyethylene, polypropylene, and polyvinylidene fluoride. The separator may be a single-layer thin film or a multi-layer composite thin film. When the separator is a multi-layer composite thin film, each layer may be made of the same or different materials.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

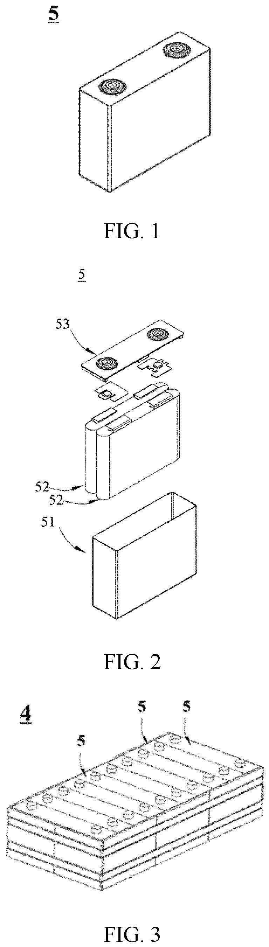

This application does not impose any special limitations on a shape of the secondary battery, and the secondary battery may be cylindrical, rectangular, or of any other shapes. FIG. 1 shows a rectangular secondary battery 5 as an example.

In some embodiments, referring to FIG. 2, the outer package may include a housing 51 and a cover plate 53. The housing 51 may include a bottom plate and a side plate connected to the bottom plate, where the bottom plate and the side plate enclose an accommodating cavity. The housing 51 has an opening in communication with the accommodating cavity, and the cover plate 53 is configured to cover the opening so as to close the accommodating cavity. The positive electrode plate, the negative electrode plate, and the separator may be made into an electrode assembly 52 through winding or lamination. The electrode assembly 52 is encapsulated into the accommodating cavity. The electrolyte infiltrates the electrode assembly 52. The secondary battery 5 may include one or more electrode assemblies 52 whose quantity is adjustable as required.

In some embodiments, the secondary battery may be assembled into a battery module. The battery module may include a plurality of secondary batteries whose specific quantity is adjustable based on application and capacity of the battery module.

FIG. 3 shows a battery module 4 as an example. With reference to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and a quantity of battery modules included in the battery pack may be adjusted based on application and capacity of the battery pack.

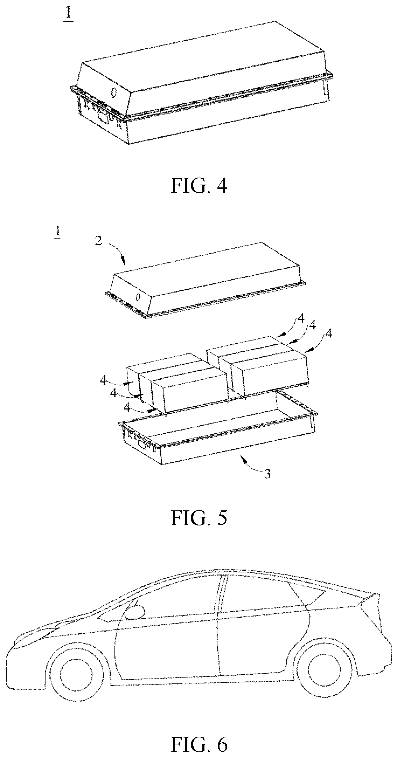

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

**Electric apparatus**

Embodiments of this application further provide an electric apparatus. The electric apparatus includes at least one of the secondary battery, the battery module, or the battery pack in this application. The secondary battery, the battery module, or the battery pack may be used as a power source for the electric apparatus, or an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy a requirement of the electric apparatus for high power and high energy density, a battery pack or a battery module may be used.

In another example, the electric apparatus may be a mobile phone, a tablet computer, a notebook computer, or the like. The electric apparatus is usually required to be light and thin, and a secondary battery may be used as a power source.

**Examples**

Content disclosed in this application is described in more detail in the following examples. These examples are merely intended for illustrative purposes because it is apparent for a person skilled in the art to make various modifications and variations within the scope of the content disclosed in this application. Unless otherwise stated, all parts, percentages, and ratios reported in the following examples are based on weight, all reagents used in the examples are commercially available or synthesized in a conventional manner, and can be used directly without further treatment, and all instruments used in the examples are commercially available.

**Example 1**

Preparation of negative electrode plate

A negative electrode active material graphite, a conductive agent acetylene black, a binder styrene-butadiene rubber, a thickener sodium carboxymethyl cellulose were mixed at a mass ratio of 95:2:2:1, dissolved in a solvent deionized water, and thoroughly stirred to obtain a uniform negative electrode slurry. Then, the negative electrode slurry was uniformly applied onto a negative electrode current collector copper foil, followed by drying and cold pressing to obtain a raw negative electrode plate.

The raw negative electrode plate was covered with 1 mg/1540mm$^2$ of a lithium metal sheet through calendering, and was then left standing in a gas mixture in which a volume ratio of $O_2$ (purity≥99.995%) to $CO_2$ (purity≥99%) was 1:12 for 12 h to make the lithium metal react with the gas mixture to obtain a negative electrode plate.

Preparation of positive electrode plate

A positive electrode active material lithium iron phosphate, a conductive agent acetylene black, and a binder polyvinylidene fluoride were mixed at a mass ratio of 97.2:1.3:1.5, dissolved in a solvent N-methylpyrrolidone, and thoroughly stirred to obtain a uniform positive electrode slurry. Then, the positive electrode slurry was uniformly applied onto a positive electrode current collector aluminum foil, followed by drying and cold pressing to obtain a positive electrode plate.

Preparation of electrolyte

In an argon atmosphere glove box with a moisture content less than 10 ppm, ethylene carbonate (EC) and ethyl methyl carbonate (EMC) were mixed at a mass ratio of 30:70 to obtain an organic solvent; fully dried lithium salt $LiPF_6$ and additive vinylene carbonate (VC) were dissolved in the organic solvent; and the resulting mixture was stirred to uniformity obtain an electrolyte. A concentration of $LiPF_6$ was 1 mol/L, and a mass percentage of VC was 1%.

Preparation of separator

A polyethylene porous film was used as a separator.

Preparation of secondary battery

The foregoing positive electrode plate, the separator, and the negative electrode plate prepared were sequentially stacked, so that the separator was located between the positive electrode plate and the negative electrode plate to provide separation. Then, the resulting stack was wound to form an electrode assembly. The electrode assembly was placed in an outer package, and the electrolyte prepared was injected into the electrode assembly that was dried, followed by processes such as vacuum packaging, standing, formation, and shaping, to obtain a secondary battery.

**Examples 2 to 24**

A preparation method of the secondary battery is similar to that in Example 1, except that related parameters used in preparation steps of the negative electrode plate were adjusted. For details, refer to Table 1.

**Comparative Example 1**

A preparation method of the secondary battery is similar to that in Example 1, except that the negative electrode plate was prepared according to the following method.
A negative electrode active material graphite, a conductive agent acetylene black, a binder styrene-butadiene rubber, a thickener sodium carboxymethyl cellulose were mixed at a mass ratio of 95:2:2:1, dissolved in a solvent deionized water, and thoroughly stirred to obtain a uniform negative electrode slurry. Then, the negative electrode slurry was uniformly applied onto a negative electrode current collector copper foil, followed by drying and cold pressing to obtain a negative electrode plate.

**Comparative Example 2**

A preparation method of the secondary battery is similar to that in Example 1, except that the negative electrode plate was prepared according to the following method.
A negative electrode active material graphite, a conductive agent acetylene black, a binder styrene-butadiene rubber, a thickener sodium carboxymethyl cellulose were mixed at a mass ratio of 95:2:2: 1, dissolved in a solvent deionized water, and thoroughly stirred to obtain a uniform negative electrode slurry. Then, the negative electrode slurry was uniformly applied onto a negative electrode current collector copper foil, followed by drying and cold pressing to obtain a raw negative electrode plate. The raw negative electrode plate was covered with $1 \text{ mg/}1540\text{mm}^2$ of a lithium metal sheet through calendering to obtain a negative electrode plate.

**Tests**

(1) Test for first inorganic lithium salt content in artificial SEI film

The negative electrode plate prepared was used (before formation of the secondary battery) to determine a percentage of the first inorganic lithium salt in the artificial SEI film on the surface of the negative electrode active material.
An Escalab 250Xi-type X-ray photoelectron spectrometer manufactured by American Thermo Fisher (Thermo) Scientific was used for the test, with an X ray excitation source being monochromatic Al K $\alpha$ (hv=1486. 6 eV), and an analysis area of the negative electrode film is 700 $\mu$m $\times$ 300 $\mu$m. Spectra of the elements C, O, S, and Li were acquired at a position that is 5 nm away from a surface layer of the negative electrode film layer, and peak differentiating was performed by XPS peak software. The mass percentages of $Li_2CO_3$ and $Li_2SO_3$ in the artificial SEI film were quantitatively analyzed based on the percentage of each element.
To guarantee accuracy of a test result, a plurality of (for example, 10) spectra at different locations may be quantitatively analyzed, and an average is recorded as the test result.

(2) Direct current internal resistance DCR test for secondary battery

At 25°C, the secondary battery was charged to 50% SOC at a constant current of 0.5C, left standing for 10 min, and discharged at a constant current of 0.1C for 10s; and a voltage after discharging was recorded as Ui. Afterwards, the secondary battery was discharged again at a constant current of 1C for 1s, and a voltage after discharging was recorded as $U_2$. A direct current internal resistance DCR (mohm) of the secondary battery is equal to $(U_1\text{-}U_2)/(1C\text{-}0.1C)$.

(3) High-temperature storage performance test for secondary battery

At 25°C, the secondary battery was charged to 3.65 V at a constant current of 1C, then charged to a current less than 0.05C at a constant voltage of 3.65 V, discharged to 2.5 V at a constant current of 1C, and then discharged to 2.5 V at a current of 0.04C. At the moment, the secondary battery was 0% SOC, and a volume of the secondary battery at this moment was measured as the volume before storage. Subsequently, the secondary battery was stored in an environment at 60°C for 30 days, and the volume of the secondary battery was tested once every 5 days. Volume swelling rate (%) of the secondary battery=(volume after storage/volume before storage -1) $\times$ 100%.

Table 1 provides parameters of Examples 1 to 24 and Comparative Examples 1 and 2. Table 2 provides test results of Examples 1 to 24 and Comparative Examples 1 and 2

**Table 1**

|  | Mass of lithium metal | Gas mixture | Standing time (h) |
|---|---|---|---|
| Example 1 | 1 mg/1540mm$^2$ | $O_2$:$CO_2$=1:12 (volume ratio) | 12 |
| Example 2 | 1 mg/1540mm$^2$ | $O_2$:$CO_2$=1:8 (volume ratio) | 12 |
| Example 3 | 1 mg/1540mm$^2$ | $O_2$:$CO_2$=1:4 (volume ratio) | 12 |
| Example 4 | 1 mg/1540mm$^2$ | $O_2$:$CO_2$=1:2 (volume ratio) | 12 |
| Example 5 | 1 mg/1540mm$^2$ | $O_2$:$CO_2$=2:1 (volume ratio) | 12 |
| Example 6 | 1 mg/1540mm$^2$ | $O_2$:$CO_2$=4:1 (volume ratio) | 12 |
| Example 7 | 0.1 mg/1540mm$^2$ | $O_2$:$CO_2$=1:2 (volume ratio) | 12 |
| Example 8 | 0.5 mg/1540mm$^2$ | $O_2$:$CO_2$=1:2 (volume ratio) | 12 |
| Example 9 | 0.8 mg/1540mm$^2$ | $O_2$:$CO_2$=1:2 (volume ratio) | 12 |
| Example 10 | 2 mg/1540mm$^2$ | $O_2$:$CO_2$=1:2 (volume ratio) | 12 |
| Example 11 | 1 mg/1540mm$^2$ | $O_2$:$SO_2$=1:2 (volume ratio) | 1 |
| Example 12 | 1 mg/1540mm$^2$ | $O_2$:$SO_2$=1:2 (volume ratio) | 6 |
| Example 13 | 1 mg/1540mm$^2$ | $O_2$:$SO_2$=1:2 (volume ratio) | 12 |
| Example 14 | 1 mg/1540mm$^2$ | $O_2$:$SO_2$=1:2 (volume ratio) | 48 |
| Example 15 | 1 mg/1540mm$^2$ | $O_2$:$SO_2$=1:2 (volume ratio) | 72 |
| Example 16 | 0.5 mg/1540mm$^2$ | $O_2$:$SO_2$=4:1 (volume ratio) | 12 |
| Example 17 | 1 mg/1540mm$^2$ | $O_2$:$SO_2$=4:1 (volume ratio) | 12 |
| Example 18 | 1 mg/1540mm$^2$ | $O_2$:$SO_2$=2:1 (volume ratio) | 12 |
| Example 19 | 1 mg/1540mm$^2$ | $O_2$:$SO_2$=1:1 (volume ratio) | 12 |
| Example 20 | 1 mg/1540mm$^2$ | $O_2$:$SO_2$=1:4 (volume ratio) | 12 |
| Example 21 | 1 mg/1540mm$^2$ | $O_2$:$SO_2$=1:12 (volume ratio) | 12 |
| Example 22 | 1 mg/1540mm$^2$ | $O_2$:$CO_2$:$SO_2$=1:2:2 (volume ratio) | 12 |
| Example 23 | 1 mg/1540mm$^2$ | $O_2$:$CO_2$:$SO_2$=1:1:2 (volume ratio) | 12 |
| Example 24 | 1 mg/1540mm$^2$ | $O_2$:$CO_2$:$SO_2$=1:2:1 (volume ratio) | 12 |
| Comparative Example 1 | \ | \ | \ |
| Comparative Example 2 | 1 mg/1540mm$^2$ | \ | \ |

**Table 2**

| | Artificial SEI film | | Secondary battery DCR (mohm) | Volume swelling rate of secondary battery after 30 days of storage (%) |
|---|---|---|---|---|
| | $Li_2CO_3$ content (%) | $Li_2SO_3$ content (%) | | |
| Example 1 | 90.0 | \ | 7.8 | 1.1 |
| Example 2 | 86.0 | \ | 7.9 | 2.2 |
| Example 3 | 80.1 | \ | 8.0 | 2.3 |
| Example 4 | 62.3 | \ | 10.5 | 2.4 |
| Example 5 | 41.0 | \ | 11.3 | 4.6 |
| Example 6 | 20.0 | \ | 33.7 | 12.0 |
| Example 7 | 27.0 | \ | 45.2 | 11.6 |
| Example 8 | 45.4 | \ | 18.1 | 5.7 |
| Example 9 | 56.0 | \ | 13.5 | 5.1 |
| Example 10 | 65.0 | \ | 8.3 | 2.2 |
| Example 11 | \ | 28.1 | 15.1 | 7.8 |
| Example 12 | \ | 65.2 | 13.8 | 2.3 |
| Example 13 | \ | 67.0 | 11.1 | 2.3 |
| Example 14 | \ | 73.5 | 7.0 | 0.9 |
| Example 15 | \ | 75.6 | 6.9 | 0.8 |
| Example 16 | \ | 20.0 | 25.0 | 10.0 |
| Example 17 | \ | 29.0 | 13.7 | 4.7 |
| Example 18 | \ | 42.0 | 12.8 | 4.0 |
| Example 19 | \ | 55.0 | 12.0 | 3.5 |
| Example 20 | \ | 86.0 | 10.5 | 2.2 |
| Example 21 | \ | 90.0 | 10.3 | 2.2 |
| Example 22 | 38.0 | 45.0 | 8.9 | 1.0 |
| Example 23 | 26.0 | 58.0 | 6.4 | 1.5 |
| Example 24 | 43.0 | 37.0 | 7.1 | 1.8 |
| Comparative Example 1 | \ | \ | 46.1 | 11.7 |
| Comparative Example 2 | \ | \ | 26.2 | 13.6 |

It can be seen from the test results of Table 2 that after the negative electrode plate is supplemented with lithium and treated with a gas mixture, a uniform artificial SEI film layer can be formed on the surface of the negative electrode active material. After the negative electrode plate is used in a secondary battery, a conventional SEI film layer may further be formed on the surface of the artificial SEI film. With electronic insulativity, the artificial SEI film can inhibit decomposition of a conventional SEI film and reduce gas production of a secondary battery, so that the secondary battery can have a low volume swelling rate.

It can be seen from the test results of Table 2 that selecting an appropriate amount of supplemented lithium, an appropriate proportion of the gas mixture and an appropriate standing reaction time enables the artificial SEI film to contain an appropriate amount of $Li_2CO_3$ and $Li_2SO_3$. In this way, the artificial SEI film has low impedance while continuously protecting the negative electrode active material, so that the secondary battery has both low volume swelling rate and low DCR.

The negative electrode plate in Comparative Example 1 was not treated; the conventional SEI film on the surface of the negative electrode active material has a relatively high film-forming impedance, resulting in relatively high DCR of the secondary battery. In addition, the conventional SEI film is also unstable in structure and is likely to decompose when the secondary battery is stored at a low voltage. Therefore, the secondary battery also has a relatively high volume swelling rate.

The lithium metal in Comparative Example 2 was not treated with a gas mixture. After liquid injection, the lithium metal reacted with a negative electrode and was intercalated into the particles of the negative electrode active material, and a thickness of the conventional SEI film formed on the surface of the negative electrode active material was reduced, thus reducing the DCR of the secondary battery to a specific extent. However, the thickness of the conventional SEI film is reduced, therefore the negative electrode active material cannot be effectively protected, and the organic solvent and the like in the electrolyte are likely to have reduction reaction on the surface of the negative electrode active material to produce lots of gas products. As a result, the volume swelling rate of the secondary battery increases.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by those skilled in the art, and other manners constructed by combining some of the constituent elements in the embodiments are also included in the scope of this application.

**Claims**

1. A negative electrode plate, comprising a negative electrode current collector and a negative electrode film layer, wherein the negative electrode film layer is provided on at least one surface of the negative electrode current collector and comprises a negative electrode active material; wherein

   at least part of surface of the negative electrode active material is provided with an artificial solid electrolyte interface film, wherein the artificial solid electrolyte interface film comprises a first inorganic lithium salt, and the first inorganic lithium salt is selected from one or two of $Li_2CO_3$ and $Li_2SO_3$; and
   optionally, calculated based on a total mass of the artificial solid electrolyte interface film, a mass percentage of the first inorganic lithium salt is 20% to 90%, optionally 80% to 90%.

2. The negative electrode plate according to claim 1, wherein the artificial solid electrolyte interface film further comprises $Li_2O$, and optionally, the artificial solid electrolyte interface film comprises the first inorganic lithium salt and $Li_2O$; and optionally, calculated based on the total mass of the artificial solid electrolyte interface film, a mass percentage of the $Li_2O$ is 10% to 80%, optionally 10% to 20%.

3. The negative electrode plate according to claim 1 or 2, wherein the artificial solid electrolyte interface film has a thickness of 5 nm to 10 nm.

4. The negative electrode plate according to any one of claims 1 to 3, wherein mass concentration deviations of elements C, O, S, and Li at any point of the artificial solid electrolyte interface film are all below 2%.

5. The negative electrode plate according to any one of claims 1 to 4, wherein the artificial solid electrolyte interface film is located on 80% to 100%, optionally 95% to 100%, of surface of particles of the negative electrode active material.

6. The negative electrode plate according to any one of claims 1 to 5, wherein calculated based on a total mass of the negative electrode active material in the negative electrode film layer, a mass percentage of the negative electrode active material provided with the artificial solid electrolyte interface film on surface is 80% to 100%, optionally 95% to 100%.

7. The negative electrode plate according to any one of claims 1 to 6, wherein the negative electrode plate is applied to a secondary battery; and after formation ends, at least part of the surface of the negative electrode active material is provided with both an artificial solid electrolyte interface film and a conventional solid electrolyte interface film located on surface of the artificial solid electrolyte interface film.

8. A preparation method of negative electrode plate, comprising the following steps:

S10. providing a raw negative electrode plate, wherein the raw negative electrode plate comprises a negative electrode current collector and a negative electrode film layer, wherein the negative electrode film layer is provided on at least one surface of the negative electrode current collector and comprises a negative electrode active material;

S20. providing a lithium metal layer on the negative electrode film layer to obtain a lithium-supplemented negative electrode plate; and

S30. making lithium metal in the lithium-supplemented negative electrode plate react with a gas mixture containing $O_2$ and one or two of $CO_2$ and $SO_2$, so as to form an artificial solid electrolyte interface film on at least part of surface of the negative electrode active material, wherein the artificial solid electrolyte interface film comprises a first inorganic lithium salt, and the first inorganic lithium salt is selected from one or two of $Li_2CO_3$ and $Li_2SO_3$.

9. The method according to claim 8, wherein in S20, a mass of the lithium metal is 0.1 mg/1540mm$^2$ to 2 mg/1540mm$^2$.

10. The method according to claim 8 or 9, wherein in S30,

a ratio of a volume of $O_2$ to a total volume of $CO_2$ and $SO_2$ in the gas mixture is 1:12 to 4:1, optionally 1:8 to 2:1; and/or
reaction is performed for 1 h to 72 h, optionally 2 h to 48 h.

11. The method according to any one of claims 8 to 10, wherein in S30, the method for making lithium metal in the lithium-supplemented negative electrode plate react with a gas mixture containing $O_2$ and one or two of $CO_2$ and $SO_2$ comprises:

placing the lithium-supplemented negative electrode plate in a nonaqueous organic solvent, optionally, the nonaqueous organic solvent being selected from one or more of dimethyl carbonate, ethyl methyl carbonate and diethyl carbonate; and continuously applying a gas mixture containing $O_2$ and one or two of $CO_2$ and $SO_2$ into the nonaqueous organic solvent to make the lithium metal react with the gas mixture, so as to form an artificial solid electrolyte interface film on at least part of the surface of the negative electrode active material; or directly placing the lithium-supplemented negative electrode plate in the gas mixture containing $O_2$ and one or two of $CO_2$ and $SO_2$ to make the lithium metal react with the gas mixture, so as to form an artificial solid electrolyte interface film on at least part of the surface of the negative electrode active material.

12. A secondary battery, comprising the negative electrode plate according to any one of claims 1 to 7 or the negative electrode plate prepared using the method according to any one of claims 8 to 11.

13. A battery module, comprising the secondary battery according to claim 12.

14. A battery pack, comprising one of the secondary battery according to claim 12 and the battery module according to claim 13.

15. An electric apparatus, comprising at least one of the secondary battery according to claim 12, the battery module according to claim 13, and the battery pack according to claim 14.

<u>5</u>

FIG. 1

<u>5</u>

53

52
52

51

FIG. 2

<u>4</u>

5    5    5

FIG. 3

FIG. 4

FIG. 5

FIG. 6

<div style="text-align:center">**INTERNATIONAL SEARCH REPORT**</div>

| International application No. |
|---|
| **PCT/CN2022/096212** |

**A. CLASSIFICATION OF SUBJECT MATTER**

H01M 4/13(2010.01)i; H01M 4/133(2010.01)i; H01M 4/134(2010.01)i; H01M 4/139(2010.01)i; H01M 4/1393(2010.01)i; H01M 4/1395(2010.01)i; H01M 10/42(2006.01)i; H01M 10/0525(2010.01)i; H01M 10/054(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 负极, 阳极, 电解质界面膜, 电解质界面层, 电解质界面材料, 碳酸锂, 亚硫酸锂, 氧气, 空气, 二氧化碳, 二氧化硫, anode, negative, SEI, Li2CO3, lithium carbonate, Li2SO3, lithium sulfite, O2, oxygen, air, CO2, SO2, carbon dioxide, sulfur dioxide

**C. DOCUMENTS CONSIDERED TO BE RELEVANT**

| Category* | Citation of document, with indication, where appropriate, of the relevant passages | Relevant to claim No. |
|---|---|---|
| X | CN 113169306 A (PANASONIC INTELLECTUAL PROPERTY MANAGEMENT CO., LTD.) 23 July 2021 (2021-07-23) description, paragraphs [0009]-[0102] | 1-15 |
| X | CN 110998916 A (NANOSCALE COMPONENTS INC.) 10 April 2020 (2020-04-10) description, paragraphs [0008]-[0076] | 1-7, 12-15 |
| X | CN 107768625 A (ULANQAB DARSEN GRAPHITE NEW MATERIALS CO., LTD.) 06 March 2018 (2018-03-06) description, paragraphs [0005]-[0080] | 1-7, 12-15 |
| X | CN 105742569 A (HUNAN SHANSHAN ENERGY TECHNOLOGY CO., LTD.) 06 July 2016 (2016-07-06) description, paragraphs [0006]-[0058] | 1-7, 12-15 |
| A | CN 108461714 A (INSTITUTE OF PHYSICS, CHINESE ACADEMY OF SCIENCES) 28 August 2018 (2018-08-28) entire document | 1-15 |
| A | JP 2010160983 A (NISSAN MOTOR CO., LTD.) 22 July 2010 (2010-07-22) entire document | 1-15 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2022** | **27 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/096212**

| Patent document cited in search report | | | Publication date (day/month/year) | Patent family member(s) | | | Publication date (day/month/year) |
|---|---|---|---|---|---|---|---|
| CN | 113169306 | A | 23 July 2021 | JP | WO2020111094 | A1 | 21 October 2021 |
| | | | | US | 2022013764 | A1 | 13 January 2022 |
| | | | | WO | 2020111094 | A1 | 04 June 2020 |
| CN | 110998916 | A | 10 April 2020 | WO | 2019014094 | A1 | 17 January 2019 |
| | | | | US | 2020161625 | A1 | 21 May 2020 |
| | | | | EP | 3652795 | A1 | 20 May 2020 |
| | | | | KR | 20200026965 | A | 11 March 2020 |
| | | | | JP | 2020527276 | A | 03 September 2020 |
| | | | | CA | 3068471 | A1 | 17 January 2019 |
| | | | | EP | 3652795 | A4 | 10 March 2021 |
| CN | 107768625 | A | 06 March 2018 | CN | 107768625 | B | 29 September 2020 |
| CN | 105742569 | A | 06 July 2016 | CN | 105742569 | B | 03 August 2018 |
| CN | 108461714 | A | 28 August 2018 | CN | 108461714 | B | 04 December 2020 |
| JP | 2010160983 | A | 22 July 2010 | | None | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111104915